# EUROPÄISCHE PATENTSCHRIFT

(11) **EP 0 610 700 B1**
(45) Veröffentlichungstag und Bekanntmachung des Hinweises auf die Patenterteilung: **23.12.1998**
(21) Anmeldenummer: 94100897.1
(22) Anmeldetag: 22.01.1994
(51) Int. Cl.: H04N 5/63, H04B 1/16

(54) **Stromversorgungsschaltung für ein Gerät der Unterhaltungselektronik**
Power supply circuit for a consumer electronics device
Circuit d'alimentation pour appareil électronique de consommation

(30) Priorität: 30.01.1993 DE 4302636; 16.10.1993 DE 4335374
(43) Veröffentlichungstag der Anmeldung: 17.08.1994
(60) Teilanmeldung: 98108702.6
(73) Patentinhaber: DEUTSCHE THOMSON-BRANDT GMBH, 78048 Villingen-Schwenningen (DE)
(72) Erfinder: Bressau, Ernst, D-78166 Donaueschingen (DE); Sagcob, Thomas, D-78052 Villingen-Schwenningen (DE); Wä-scher, Uli, D-78050 Villingen-Schwenningen (DE); Rilly, Gerard, D-78089 Unterkirnach (DE); Amann, Ulrich, Singapore 1130 (SG)

(56) Entgegenhaltungen:
- EP-A- 0 158 251
- EP-A- 0 167 737
- EP-A- 0 436 515
- DE-A- 3 045 715
- PATENT ABSTRACTS OF JAPAN vol. 8, no. 8 (E-221) (1445) 13. Januar 1984 & JP-A-58 175 367 (SONY) 14. Oktober 1983

## Beschreibung

Die Erfindung geht aus von einer Stromversorgungsschaltung für ein Gerät der Unterhaltungselektronik gemäß dem Oberbegriff der Ansprüche 1 und 5. Bei derartigen Geräten ist der Standby-Betrieb im allgemeinen über längere Zeiträume eingeschaltet, zumal viele Benutzer auch bei längerer Nichtbenutzung des Gerätes, bei längerer Abwesenheit und während der Nachtstunden das Gerät nicht von dem Standby-Betrieb in den völlig ausgeschalteten Betrieb umschalten. Man ist daher bemüht, die Leistungsaufnahme des Gerätes aus dem Netz während des Standby-Betriebes möglichst gering zu halten.

Aus der EP-A-0 436 515 ist eine Stromversorgungsschaltung nach dem Oberbegriff der Ansprüche 1 und 5 bekannt. Hier wird im Standby-Betrieb die Leistungsaufnahme gering gehalten, indem das Schaltnetzteil der Stromversorgungsschaltung in diesem Betrieb abgeschaltet ist und für den Standby-Betrieb benötigte Schaltungen, u. a. ein Signalprozessor zur Dekodierung von Infrarot-Signalen einer Fernbedienung, von einem linearen, zusätzlichen Netzteil versorgt werden.

Aus "Patent Abstracts of Japan, Vol. 8, No. 8, (E-221) (1445)" ist eine Stromversorgungsschaltung bekannt, die eine Batterie und eine zusätzliche Schaltung für den Standby-Betrieb enthält, wobei diese Schaltung nur die Anwesenheit oder Abwesenheit von Fernbedienungssignalen unter Verwendung eines AC - DC Konverters erkennt.

Der Erfindung liegt die Aufgabe zugrunde, das Gerät so auszubilden, daß die während des Standby-Betriebes dem Netz entnommene Leistung weiter verringert wird. Diese Aufgabe wird durch die in den Ansprüchen 1 und 5 angegebene Erfindung gelöst. Vorteilhafte Weiterbildungen der Erfindung sind in den Unteransprüchen angegeben.

Die Erfindung besteht darin, daß ein dritter Betrieb als ökobetrieb vorgesehen ist, in dem nur der Fernbedienungsempfänger und ein an dessen Ausgang angeschlossenes Filter mit Betriebsspannung versorgt sind, und daß das Filter so ausgebildet ist, daß es erkennt, ob ein Fernbedienungssignal mit einem dem Gerät zugeordneten Code empfangen wird, und in diesem Fall eine erste Schaltspannung erzeugt, die den an sich abeschalteten Mikroprozessor aktiviert.

Bei der Erfindung wird also ein dritter Betrieb geschaffen, der als Ökobetrieb bezeichnet werden kann. Während dieses Betriebes sind nur noch der Infrarot Infrarot-Fernbedienungsempfänger und ein daran angeschlossenes selektives Filter wirksam. Das Filter hat nur die Aufgabe, im Ökobetrieb zu prüfen, ob überhaupt ein dem Gerät zugeordneter Code empfangen wird, ohne den Befehl des Codes selbst auszuwerten. Das Filter unterscheidet somit zwischen einem derartigen Code und ähnlichen Signalen, wie sie von anderen Verbrauchern wie Leuchtstoffröhren kommen können. Diese beiden Bauteile können mit sehr geringer Leistungsaufnahme realisiert werden, der Empfänger z.B. mit 9 mW und das Filter mit wenigen mW, wobei das Filter auch rein passiv ausgebildet sein kann. Erst wenn ein dem Gerät zugeordneter Code in dem Filter erkannt wird, wird der das gesamte Gerät steuernde Mikroprozessor, der im Ökobetrieb ausgeschaltet ist, aktiviert, also gewissermaßen "aus dem Schlaf geweckt". Der Mikroprozessor wertet jetzt nunmehr den ihm vom Fernbedienungsempfänger zugeführten Code aus. Sobald der Mikroprozessor einen verwertbaren Befehl, z.B. "Empfänger auf Kanal 11 einschalten" erkennt, schaltet sich der Prozessor selbsttätig an die Betriebsspannung an und hält sich danach selbst aktiv.

In dem Filter werden vorzugsweise die Flankensteilheit, die Impulsdauer und der Impulsabstand des vom Fernbedienungsempfänger empfangenen Signals ausgewertet. Dadurch ist eine ausreichende Unterscheidung eines richtigen Codes von ähnlichen Codes von anderen Verbrauchern möglich. Das Filter enthält vorzugsweise eine Differenzierstufe zur Detektierung der Flankensteilheit, eine erste Schwellwertstufe, ein Integrierglied zur Detektierung des Impulsabstandes, eine zweite Schwellwertstufe und eine monostabile Kippstufe, deren Ausgangsspannung zum Aktivieren oder "Wecken" des Mikroprozessors dient.

Gemäß einer weiteren Ausgestaltung der Erfindung ist das Gerät während des dritten Betriebes, also des Ökobetriebes, vollständig vom Netz getrennt, und der Fernbedienungsempfänger sowie das Filter sind nur durch eine im Gerät enthaltene Batterie mit Betriebsspannung versorgt. Diese Art der Batterieversorgung trotz vorhandenem Netz hat folgenden Sinn. Das Netzgerät für den Fernsehempfänger oder den Videorecorder, das im allgemeinen für Leistungen zwischen 100 bis 200 Watt ausgelegt ist, hat bei der geringen Leistung bei Ökobetrieb von nur wenigen mW einen schlechten Wirkungsgrad und daher große Verluste. Es hat sich gezeigt, daß bei der extrem geringen Leistungsaufnahme, z.B. 10 - 20 mW in dem Ökobetrieb, die Stromversorgung durch eine Batterie energiemäßig günstiger ist als der ständige Betrieb des Netzgerätes oder eines zusätzlichen Netzgerätes. Die Verlustleistung kann durch die Anwendung der Batterie beträchtlich verringert werden. Da erfahrungsgemäß das Gerät regelmäßig in den Normalbetrieb eingeschaltet wird, ist auch gewährleistet, daß die Batterie von einer bei Normalbetrieb im Gerät vorhandenen Spannung genügend häufig und lange wieder aufgeladen wird. Der Betrieb mit Batterie ist auch hinsichtlich der Gefahren von Kurzschluß, Brand und dgl. sicherer als ein Dauerbetrieb, bei dem ständig ein Netzgerät an das Netz angeschlossen ist.

Gemäß einer Ausführungsform der Erfindung ist an die Netzspannung eine Detektorschaltung angeschlossen, die die Anwesenheit oder Abwesenheit der Netzspannung detektiert und eine Schaltspannung erzeugt, die bei abwesender Netzspannung die Batterie von allen Bauteilen des Gerätes abschaltet. Das hat folgenden Sinn. Wenn die Netzspannung nicht vorhanden ist, z.B. bei Netzausfall oder beim Transport des Gerätes, ist der Normalbetrieb nicht möglich. Ein Ökobetrieb oder Standby-Betrieb, der jederzeit die Einschaltung in den Normalbetrieb ermöglichen soll, ist dann sinnlos und würde unnütz Energie verbrauchen.

Vorzugsweise ist außerdem an die Batterie eine Detektorschaltung angeschlossen, die bei zu weit entladener Batterie eine dritte Schaltspannung erzeugt, die das Gerät von dem Ökobetrieb in den Standby-Betrieb vom Netz umschaltet. Dadurch wird erreicht, daß auch bei zu weit entladener Batterie das Gerät durch die Fernbedienung einschaltbar bleibt. Der Benutzer merkt dann die Umschaltung nicht. Es wird lediglich vom Ökobetrieb mit Batterie in den Standby-Betrieb vom Netz umgeschaltet. Eine Fehlermeldung kann verwendet werden, den Betriebszustand anzuzeigen, wobei die Meldung nicht ständig erscheinen muß. Es reicht, wenn diese Meldung abrufbar ist.

Die Erfindung wird im folgenden anhand der Zeichnung erläutert. Darin zeigen
- Fig. 1: ein Blockschaltbild eines Fernsehempfängers mit der erfindungsgemäßen Stromversorgungsschaltung,
- Fig. 2: eine praktische Ausbildung des Filters,
- Fig. 3: Kurven zur Erläuterung der Wirkungsweise der Schaltung nach Fig. 2.

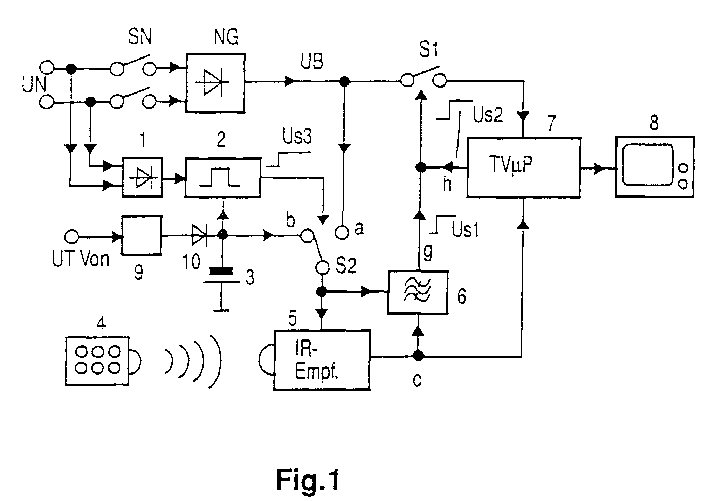

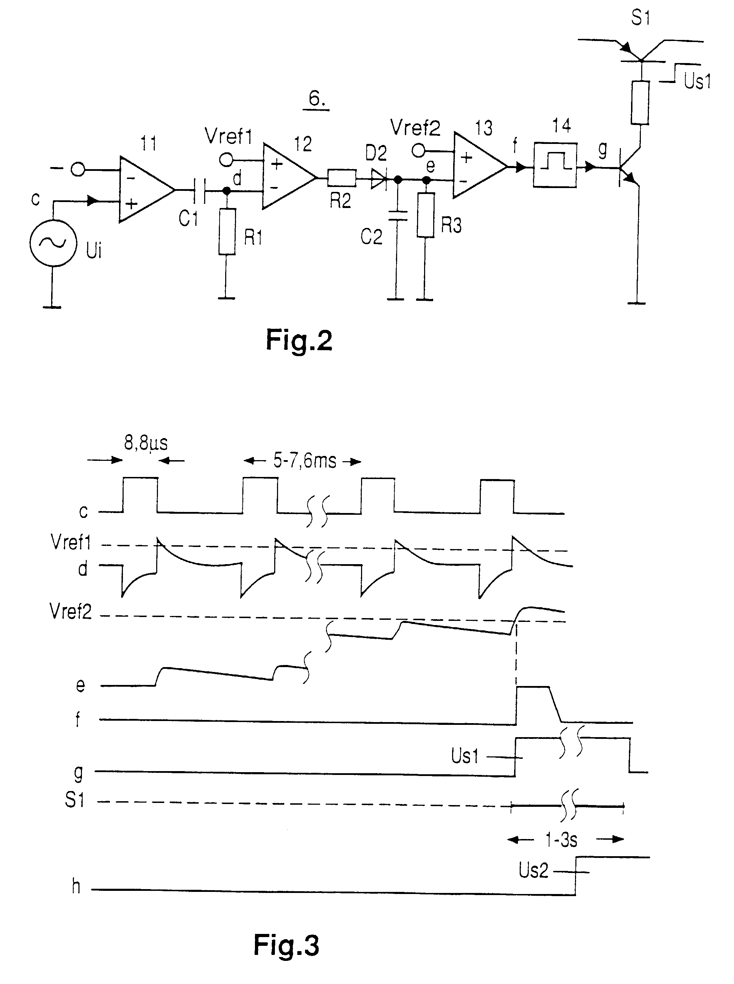

Die kleinen Buchstaben zeigen dabei, an welchen Punkten in Fig. 1 und 2 die Signale gemäß Fig. 3 stehen.

In Fig. 1 ist die Netzspannung UN über den Netzschalter SN an den Netzgleichrichter NG angelegt, der die Betriebsspannung UB sowie alle weiteren Betriebsspannungen für den Normalbetrieb des Fernsehempfängers erzeugt. Der Netzschalter SN ist bei Normalbetrieb geschlossen und bei Ökobetrieb geöffnet. Die Netzspannung UN ist außerdem an die Detektorschaltung 1 angelegt. Diese stellt nur fest, ob die Netzspannung UN vorhanden ist oder nicht, und liefert dementsprechend eine Stellgröße an die Impulsstufe 2. Außerdem sind dargestellt die Batterie 3, der von dem Fernbediengeber 4 gesteuerte Infrarot-Fernbedienungsempfänger 5, das Filter 6, der Mikroprozessor 7 und der davon gesteuerte Fernsehempfänger 8. Zwischen der Betriebsspannung UB, die vom Netzteil NG geliefert wird, und der Betriebsspannungsklemme des Mikroprozessors 7 liegt der Schalter S1. Die Betriebsspannungsklemmen des Fernbedienungsempfängers 5 und des Filters 6 sind mit dem Schalter S2 in der Stellung a an die aus dem Netz gewonnene Betriebsspannung UB und in der Stellung b an die Batterie 3 anschaltbar. An die Batterie 3 ist ein Ladeweg mit der Schaltung 9 und der Entkopplungsdiode 10 angeschlossen. Im folgenden wird die Wirkungsweise dieser Schaltung nacheinander für die einzelnen Betriebsarten erläutert.

### 1. Ökobetrieb

Der Schalter S1 ist geöffnet, der Schalter S2 in Stellung b. Das Netz ist von der Geräteschaltung vollständig abgeschaltet, wobei nur die Detektorschaltung 1 und die Impulsstufe 2 wirksam sind. Der Empfänger 5 ist also empfangsbereit für ein Signal von der Fernbedieneinheit 4, ohne daß Leistung vom Netz entnommen wird.

### 2. Standby-Betrieb vom Netz

Der Schalter S2 ist in die Stellung a umgelegt, so daß nunmehr der Empfänger 5 und das Filter 6 vom Netz mit geringer Leistung gespeist werden. Dieser Betrieb wird durch die Detektorschaltung 1 und die Impulsstufe 2 über die Schaltspannung Us3 z.B. dann eingeleitet, wenn keine Netzspannung UN anwesend ist oder wenn in der Impulsstufe 2 eine zu starke Entladung der Batterie 3 festgestellt wird oder auch die Batterie völlig entladen oder nicht vorhanden ist. Ansonsten ist die Empfangsbereitschaft der Schaltung für Fernbedienungssignale genauso wie im Ökobetrieb. Der Schalter S1 bleibt dabei geöffnet, der Prozessor 7 somit weiterhin abgeschaltet.

### 3. Normalbetrieb

Wenn das Filter 6 im Ausgangssignal des Empfängers 5 einen dem Gerät zugeordneten Code erkennt, z.B. durch Auswertung von Flankensteilheit, Impulsdauer und Impulsabstand, erzeugt das Filter 6 die Schaltspannung Us1. Us1 schließt daraufhin den Schalter S1. Dadurch wird, nachdem auch der Netzschalter SN geschlossen wurde, der Prozessor 7 mit der Betriebsspannung UB versorgt und kann jetzt das vom Empfänger 5 kommende Signal daraufhin auswerten, ob das Signal einen für den Empfänger verwertbaren Befehl, z.B. "Empfänger auf Kanal 11 einschalten" enthält. Wenn der Prozessor 7 in dem vom Empfänger 5 kommenden Signal einen verwertbaren Befehl erkennt, erzeugt er die Schaltspannung Us2, die nunmehr den durch Usl kurzzeitig geschlossenen Schalter S1 weiterhin geschlossen hält. Außerdem steuert der Prozessor 7 die gesamte Empfängerschaltung wie Kanalabstimmung entsprechend dem vom Empfänger 5 empfangenen Befehl. Der Schalter S2 kann dabei die Stellung a oder b annehmen, da an beiden Klemmen a, b eine Betriebsspannung ansteht. Selbst bei der Stellung b wird nunmehr die Batterie 3 über die im Normalbetrieb auftretende Spannung UTVon über den Ladeweg 9, 10 ständig oder nach Bedarf nachgeladen. Dieser Ladestrom ist größer als der Endladestrom zur Speisung des Empfängers 5 und des Filters 6, so daß die Batterie 3 nicht entladen werden kann.

### 4. Netzausfall

Bei Netzausfall, z.B. beim Transport des Gerätes, erzeugen die Impulsstufe 2 eine Schaltspannung Us3, die den Schalter S2 in die Stellung a umlegt. Die Batterie 3 ist dann vollständig von der Empfängerschaltung getrennt, abgesehen von der Detektorschaltung 2. Das ist sinnvoll, da bei fehlendem Netz der Normalbetrieb ohnehin nicht möglich und daher eine Speisung von Empfänger 5 und Filter 6 durch die Batterie 3 sinnlos ist.

Fig. 2 zeigt eine praktische Schaltung für das Filter 6. Ui stellt die Signalquelle dar, also den Ausgang des Empfängers 5. Die Signalspannung c gelangt auf einen Eingang des Komparators 11, an dessen Ausgang das Differenzierglied C1,R1 mit einer Zeitkonstante von etwa 4 µs angeschlossen ist. Am Punkt d entsteht dadurch die differenzierte Spannung d, die auf einen Eingang des mit einer Referenzspannung Vref1 gespeisten Komparators 12 gelangt. Der Komparator 12 spricht somit nur dann an, wenn die positiven differenzierten Spitzen der Spannung d den Schwellwert Vref1 überschreiten. Dadurch werden die Flankensteilheit des empfangenen Signals c und die Breite der positiven Impulse c ausgewertet und eine Unterscheidung von Signalen anderer Verbraucher bewirkt, deren Spannungen im allgemeinen eine geringere Flankensteilheit oder zu kurze Impulse aufweisen. Bei anderen Verbrauchern wie z.B. Leuchtstoffröhren ist die Dauer der Impulse c wesentlich geringer. Die Spannung d erreicht dann den Schwellwert Vref1 nicht, so daß die Schaltung auf Impulse derartiger Verbraucher in erwünschter Weise nicht anspricht. Das Signal vom Ausgang des Komparators 12 gelangt auf die Integrierstufe R2, D2, C2, R3, wobei die Diode D2 eine kleine Aufladezeitkonstante R2 x C2 von ca 2 µs und eine wesentlich größere Entladezeitkonstante R3 x C3 von ca 30 ms bewirkt. Am Ausgang e des Integriergliedes steht die integrierte Spannung e, die auf den mit der Referenzspannung Vref2 gespeisten Komparator 13 gelangt. Der Impuls f am Ausgang des Komparators 13 erscheint durch die Integrierwirkung nur dann, wenn mehrere Impulse c mit einer vorgegebenen Mindest-Flankensteilheit und einem vorgegebenen Impulsabstand empfangen werden. Durch den dann erzeugten Impuls in der Spannung f wird die monostabile Schaltung 14 ausgelöst, die daraufhin die Schaltspannung Us1 erzeugt. Us1 betätigt gemäß Fig. 1 den als Transistor dargestellten Schalter S1 für eine Dauer von etwa 1 - 3 s. Wenn der Prozessor 7 während dieser Zeit einen verwertbaren Befehl erkennt, wird wie beschrieben die Schaltspannung Us2 erzeugt, die nunmehr den Schalter S1 geschlossen hält.

## Patentansprüche

1. Stromversorgungsschaltung für ein Gerät der Unterhaltungselektronik mit netzgespeistem Standby-Betrieb und Normalbetrieb, zwischen denen über einen Fernbedienungsempfänger (5) umschaltbar ist, dessen Ausgangssignale (c) einem das Gerät steuernden Mikroprozessor (7) zugeführt sind, **dadurch gekennzeichnet,** daß ein dritter Betrieb als Ökobetrieb vorgesehen ist, in dem nur der Fernbedienungsempfänger (5) und ein an dessen Ausgang angeschlossenes Filter (6) mit Betriebsspannung versorgt sind, daß das Filter (6) so ausgebildet ist, daß es erkennt, ob ein Fernbedienungssignal mit einem dem Gerät zugeordneten Code empfangen wird, und in diesem Fall eine erste Schaltspannung (Us1) erzeugt, die den an sich abgeschalteten Mikroprozessor (7) aktiviert, und daß in dem Filter (6) die Erkennung des dem Gerät zugeordneten Codes durch Auswertung der Flankensteilheit, des Impulsabstandes und der Dauer der vom Fernbedienungsempfänger (5) empfangenen Impulse erfolgt.

2. Schaltung nach Anspruch 1, **dadurch gekennzeichnet,** daß die erste Schaltspannung (US1) einen zwischen einem Netzgleichrichter (NG) und dem Mikroprozessor (7) liegenden Schalter (S1) kurzzeitig schließt, der daraufhin, wenn der Mikroprozessor (7) im zugeführten Signal einen verwertbaren Befehl erkennt, durch eine vom Mikroprozessor (7) erzeugte zweite Schaltspannung (Us2) geschlossen gehalten wird.

3. Schaltung nach Anspruch 1, **dadurch gekennzeichnet,** daß das Filter (6) eine Differenzierstufe (C1, R1), eine erste Schwellwertstufe (12), ein Integrierglied (C2, R3), eine zweite Schwellwertstufe (13) und eine monostabile Kippstufe (14) enthält, deren Ausgangsspannung (g) zum Aktivieren des Mikroprozessors (7) dient.

4. Schaltung nach Anspruch 1, 2, oder 3, **dadurch gekennzeichnet,** daß während des dritten Betriebs das Gerät vom Netz getrennt und eine im Gerät enthaltene Batterie (3) an den Fernbedienungsempfänger (5) und das Filter (6) angeschlossen ist.

5. Stromversorgungsschaltung für ein Gerät der Unterhaltungselektronik mit netzgespeistem Standby-Betrieb und Normalbetrieb, zwischen denen über einen Fernbedienungsempfänger (5) umschaltbar ist, dessen Ausgangssignale (c) einem das Gerät steuernden Mikroprozessor (7) zugeführt sind, **dadurch gekennzeichnet,** daß ein dritter Betrieb als Ökobetrieb vorgesehen ist, in dem nur der Fernbedienungsempfänger (5) und ein an dessen Ausgang angeschlossenes Filter (6) mit Betriebsspannung versorgt sind, daß das Filter (6) so ausgebildet ist, daß es erkennt, ob ein Fernbedienungssignal mit einem dem Gerät zugeordneten Code empfangen wird, und in diesem Fall eine erste Schaltspannung (Us1) erzeugt, die den an sich abgeschalteten Mikroprozessor (7) aktiviert, daß während des dritten Betriebs das Gerät vom Netz getrennt und eine im Gerät enthaltene Batterie (3) an den Fernbedienungsempfänger (5) und das Filter (6) angeschlossen ist, und daß an den Netzeingang eine Detektorschaltung (1) angeschlossen ist, die die Anwesenheit oder Abwesenheit der Netzspannung (UN) detektiert und eine dritte Schaltspannung (Us3) erzeugt, die bei abwesender Netzspannung (UN) die Batterie (3) von allen Bauteilen des Gerätes abschaltet.

6. Schaltung nach Anspruch 5, **dadurch gekennzeichnet,** daß die Batterie (3) durch einen wiederladbaren Akku gebildet und vorzugsweise in einer Batterieschublade angeordnet ist.

7. Schaltung nach Anspruch 6, **dadurch gekennzeichnet,** daß eine nur im Normalbetrieb des Gerätes auftretende Spannung (UTVon) über einen Ladeweg (9, 10) an den Akku (3) angelegt ist.

8. Schaltung nach Anspruch 6 oder 7, **dadurch gekennzeichnet,** daß an die Batterie (3) eine Impulsstufe (2) angeschlossen ist, die bei zu weit entladener Batterie (3) eine dritte Schaltspannung (Us3) erzeugt, die das Gerät in den Standby-Betrieb vom Netz umschaltet.

## Claims

1. Current supply circuit for a consumer electronics apparatus having a mains powered standby mode and a normal mode, which modes can be switched between by means of a remote control receiver (5) whose output signals (c) are supplied to a microprocessor (7) controlling the apparatus, characterised in that, a third mode is provided as an economy mode in which only the remote control receiver (5) and a filter (6) connected to its output are supplied with operating voltage, that the filter (6) is constructed such that it recognises whether a remote control signal having a code allocated to the apparatus is being received and, in this case, generates a first switching voltage (Us1) which activates the generally switched-off microprocessor (7), and that the recognition of the code allocated to the apparatus in the filter (6) is effected by evaluating the edge slope, the pulse spacing and the duration of the pulses received by the remote control receiver (5).

2. Circuit in accordance with Claim 1, characterised in that, the first switching voltage (US1) closes a switch (S1) located between a mains rectifier (NG) and the microprocessor (7) for a short time, which switch is thereupon held closed by a second switching voltage (Us2) generated by the microprocessor (7) if the microprocessor (7) recognises a realisable command in the supplied signal.

3. Circuit in accordance with Claim 1, characterised in that, the filter (6) contains a differentiating stage (C1, R1), a first threshold value stage (12), an integrating member (C2, R3), a second threshold value stage (13) and a monostable trigger stage (14) whose output voltage (g) serves for the activation of the microprocessor (7).

4. Circuit in accordance with Claim 1, 2, or 3, characterised in that, the apparatus is disconnected from the mains during the third mode and a battery (3) contained in the apparatus is connected to the remote control receiver (5) and the filter (6).

5. Current supply circuit for a consumer electronics apparatus having a mains powered standby mode and a normal mode, which modes can be switched between by means of a remote control receiver (5) whose output signals (c) are supplied to a microprocessor (7) controlling the apparatus, characterised in that, a third mode is provided as an economy mode in which only the remote control receiver (5) and a filter (6) connected to its output are supplied with operating voltage, that the filter (6) is constructed such that it recognises whether a remote control signal having a code allocated to the apparatus is being received and, in this case, generates a first switching voltage (Us1) which activates the generally switched-off microprocessor (7), that the apparatus is disconnected from the mains during the third mode and a battery (3) contained in the apparatus is connected to the remote control receiver (5) and the filter (6), and that a detector circuit (1, 2) is connected to the mains input, which circuit detects the presence or absence of the mains voltage (UN) and generates a third switching voltage (Us3) that switches off the battery (3) from all the components in the apparatus in the absence of mains voltage (UN).

6. Circuit in accordance with Claim 5, characterised in that, the battery (3) is formed by a rechargeable accumulator and is preferably arranged in a battery drawer.

7. Circuit in accordance with Claim 6, characterised in that, a voltage (UTVon) occurring only in the normal mode of the apparatus is applied to the accumulator (3) via a charging path (9, 10).

8. Circuit in accordance with Claim 6 or 7, characterised in that, a pulse stage (2) is connected to the battery (3) which stage, for an excessively discharged battery (3), generates a third switching voltage (Us3) that switches the apparatus into the standby mode from the mains.

## Revendications

1. Circuit d'alimentation en courant électrique pour un appareil d'électronique grand public, comportant un mode de fonctionnement en veille et un mode de fonctionnement normal à partir du réseau, entre lesquels une commutation est opérée par l'intermédiaire d'un récepteur de télécommande (5), dont les signaux de sortie (c) sont transmis à un microprocesseur (7) qui commande l'appareil, caractérisé en ce qu'un troisième mode de fonctionnement est prévu en tant que mode économique dans lequel seuls le récepteur de télécommande (5) et un filtre (6) connecté à la sortie de ce dernier sont alimentés avec une tension de service , en ce que le filtre (6) est agencé de telle sorte qu'il détecte si un signal de télécommande avec un code associé à l'appareil est reçu et dans ce cas produit une première tension de commutation (Us1) qui active le microprocesseur (7) normalement coupé et en ce que dans le filtre (6), la détection du code associé à l'appareil est opérée par exploitation de la pente des flancs, de l'espacement des impulsions et de la durée des impulsions reçues par le récepteur de télécommande (5).

2. Circuit selon la revendication 1, caractérisé en ce que la première tension de commutation (Us1) ferme pour un court instant un commutateur (S1) disposé entre un redresseur du réseau (NG) et le microprocesseur (7), lequel commutateur, lorsque le microprocesseur (7) détecte un ordre exploitable dans le signal transmis , est maintenu fermé par une deuxième tension de commutation (Us2) produite par le microprocesseur (7).

3. Circuit selon la revendication 1, caractérisé en ce que le filtre (6) contient un premier étage différenciateur (C1, R1), un premier étage de seuil (12), un élément intégrateur (C2, R3), un deuxième étage de seuil (13) et une bascule monostable (14) dont la tension de sortie (g) sert à l'activation du microprocesseur (7).

4. Circuit selon revendication 1, 2 ou 3, caractérisé en ce que pendant le troisième mode de fonctionnement l'appareil est isolé du réseau et qu'un accumulateur (3) intégré à l'appareil est connecté au récepteur de télécommande (5) et au filtre (6).

5. Circuit d'alimentation en courant électrique pour un appareil d'électronique grand public, présentant un mode de fonctionnement en veille et un mode de fonctionnement normal à partir du réseau, entre lesquels une commutation est opérée par l'intermédiaire d'un récepteur de télécommande (5), dont les signaux de sortie (c) sont transmis à un microprocesseur (7) qui commande l'appareil, caractérisé en ce qu'un troisième mode de fonctionnement est prévu en tant que mode économique, dans lequel seuls le récepteur de télécommande (5) et un filtre (6) connecté à la sortie de ce dernier sont alimentés avec une tension de service, en ce que le filtre (6) est agencé de telle sorte qu'il détecte si un signal de télécommande avec un code associé à l'appareil est reçu et dans ce cas produit une première tension de commutation (Us1) qui active le microprocesseur (7) normalement coupé, en ce que pendant le troisième mode de fonctionnement l'appareil est coupé du réseau et un accumulateur (3) intégré à l'appareil est connecté au récepteur de télécommande (5) et au filtre (6) et en ce qu'un circuit de détection (1) est connecté à l'entrée réseau, lequel circuit de détection détecte la présence ou l'absence de la tension du réseau (UN) et produit une troisième tension de commutation (Us3) qui, lorsque la tension du réseau (UN) est absente, coupe l'accumulateur (3) de tous les composants de l'appareil.

6. Circuit selon la revendication 5, caractérisé en ce que l'accumulateur (3) est un accumulateur rechargeable et de préférence est logé dans un tiroir à accumulateur.

7. Circuit selon la revendication 6, caractérisé en ce qu'une tension (UTVon) produite seulement en fonctionnement normal de l'appareil est appliquée à l'accumulateur (3) par le biais d'un circuit de charge (9, 10).

8. Circuit selon la revendication 6 ou 7, caractérisé en ce qu'un étage d'impulsion (2) est connecté à l'accumulateur (3), étage qui, lorsque l'accumulateur (3) est trop fortement déchargé, produit une troisième tension de commutation (Us3) qui commute l'appareil en mode veille sur le réseau.
